# FASCICULE DE BREVET EUROPEEN

(11) **EP 4 315 565 B1**
(45) Date de publication et mention de la délivrance du brevet: **02.09.2026**
(21) Numéro de dépôt: 22704937.6
(22) Date de dépôt: 01.02.2022
(51) Int. Cl.: H02K 1/276

(54) **ROTOR DE MACHINE ÉLECTRIQUE TOURNANTE**
ROTOR FÜR EINE ELEKTRISCHE DREHMASCHINE
ROTOR FOR A ROTARY ELECTRIC MACHINE

(30) Priorité: 29.03.2021 FR 2103152
(43) Date de publication de la demande: 07.02.2024
(73) Titulaire: Nidec PSA Emotors, 78955 Carrieres sous Poissy (FR)
(72) Inventeur: FERNANDEZ, Alejandro, 92600 ASNIERES SUR SEINE (FR); AL EIT, Moustafa, 92600 ASNIERES SUR SEINE (FR); SAINT-MICHEL, Jacques, 16000 Angoulême (FR); KOECHLIN, Samuel, 16000 Angoulême (FR)
(74) Mandataire: VATD
(86) Numéro de dépôt international: PCT/FR2022/050169
(87) Numéro de publication internationale: WO 2022/207985

(56) Documents cités:
- WO-A1-2018/214917
- WO-A1-2020/067347
- CN-A- 109 038 881
- CN-U- 208 316 434
- US-A1- 2009 026 868
- US-A1- 2015 229 170
- US-A1- 2017 317 540

## Description

La présente invention revendique la priorité de la demande française 2103152 déposée le 29 mars 2021 dont le contenu (texte, dessins et revendications) est ici incorporé par référence.

### Domaine technique

La présente invention concerne les machines électriques tournantes, motrices ou génératrices, et plus particulièrement les rotors de telles machines. L'invention s'intéresse aux rotors à aimants permanents.

L'invention porte plus particulièrement sur les machines synchrones ou asynchrones, à courant alternatif. Elle concerne notamment les machines de traction ou de propulsion de véhicules automobiles électriques (Battery Electric Vehicle) et/ou hybrides (Hybrid Electric Vehicle - Plug-in Hybrid Electric Vehicle), telles que voitures individuelles, camionnettes, camions ou bus. L'invention s'applique également à des machines électriques tournantes pour des applications industrielles et/ou de production d'énergie, notamment navales, aéronautiques ou éoliennes.

### Technique antérieure

Les rotors à aimants permanents sont généralement composés d'une masse rotorique et d'aimants permanents de formes géométriques diverses. La masse rotorique peut comporter un empilement de tôles magnétiques minces découpées. Elle peut comporter un ou plusieurs paquets de tôles empilés les uns sur les autres.

Les aimants permanents peuvent être disposés en surface, faisant directement face à l'entrefer ou, en variante, être disposés à l'intérieur de la masse rotorique, dans des logements de ce dernier, étant alors dits « enterrés » ou « encastrés ».

Dans ce cas, ils peuvent être disposés en rangées, comme par exemple dans la demande US 2007/0096578, dans laquelle les logements des aimants ont des extrémités arrondies en demi-cercle, de même que dans la demande US 2007/0096577.

Dans les demandes CN110212666, US 2013/0020889 et DE 10 2017 206928, on a un aimant permanent disposé en surface et une seule rangée d'aimants enterrés.

Dans les demandes US RE 44037, US 2014/084729, US 2009/045689 et EP 2 518 871, on a une seule rangée d'aimants enterrés.

Dans les demandes US 2015/280499 et WO 2019/179864, les aimants permanents des deux rangées sont disposés en V. Il n'y a pas de rangée en U.

Dans les demandes US 2017/317540, US 2015/229170 et US 2008/007131, les rangées sont disposées de telle sorte que deux aimants de deux rangées sont également parallèles entre eux.

Dans les demandes WO 2020/221543 et US 2020/259377, la grande rangée comporte quatre logements disposés en V, avec chaque branche du V composée de deux logements latéraux non alignés, et étant dépourvue de logement central.

Dans les demandes WO 2020/067347 et CN 208 316 434, la grande rangée comporte au moins un aimant permanant courbé.

On connait également la demande US 2009/026868 dans laquelle la grande rangée comporte une fente centrale pouvant être vide.

Enfin, la demande internationale WO 2019/049397 comporte une circulation de fluide de refroidissement dans les logements, de part et d'autre des aimants permanents de chaque rangée. L'inclinaison entre les aimants permanents des deux rangées est assez importante.

Il existe un besoin pour améliorer les performances magnétiques et notamment le couple volumique des machines électriques tournantes, et réduire leur coût de fabrication et de montage.

### Résumé de l'invention

L'invention vise à répondre à ce besoin et a ainsi pour objet, selon l'un de ses aspects, un rotor de machine électrique tournante, comportant une masse rotorique comportant des tôles empilées les unes sur les autres, la masse rotorique comportant une pluralité de logements, au moins une partie des logements, voire tous les logements, recevant un ou des aimants permanents définissant des pôles du rotor,
les logements d'un pôle étant disposés en au moins une première et une deuxième rangées de logements qui ne sont pas parallèles entre elles,
la première rangée de logements comportant au moins trois logements disposés en U, avec au moins un logement central et deux logements latéraux, le logement central de la première rangée pouvant être dépourvu d'aimant permanent,
la deuxième rangée de logements comportant des logements disposés en V, notamment deux logements disposés en V.

L'invention permet avantageusement d'augmenter le couple de la machine et donc la densité de couple sans augmenter le volume des aimants reçus dans la masse rotorique, grâce à l'amélioration du couple de saillance. L'invention permet avantageusement d'augmenter le couple réluctant /couple de saillance de la machine. On réduit également les pertes, les risques de bruits et les vibrations d'origine électromagnétique.

Les première et deuxième rangées de logements ne sont pas parallèles entre elles, au sens où il n'y a pas un logement de l'une des rangées qui serait parallèle à un logement de l'autre rangée. Les grands axes des aimants permanents de chacune des rangées ne sont pas parallèles entre eux.

Dans un mode de réalisation, la première rangée ne comporte que deux logements latéraux, disposés chacun d'un côté du logement central. La première rangée peut ne pas comporter deux logements d'un même côté du logement central. La première rangée peut ne pas comporter deux aimants permanents d'un même côté du logement central.

Pour un même résultat électromagnétique, on peut réduire la quantité d'aimants.

Les flux de fuite sont minimisés grâce à la forme des rangées de logements et à leurs dimensions.

Le rotor selon l'invention est particulièrement adapté aux fonctionnements à haute vitesse, de l'ordre de 18 000 tr/min par exemple.

Dans un mode de réalisation, le rotor comporte une première et une deuxième rangées de logements par pôle, étant dépourvu de rangée supplémentaire. La deuxième rangée peut être plus proche de l'entrefer que la première rangée. La première rangée est plus éloignée de l'entrefer que la deuxième rangée.

Les deux logements latéraux sont symétriques l'un de l'autre par rapport à un axe du pôle.

La masse rotorique peut comporter un ou plusieurs paquets de tôles empilés les uns sur les autres. Chaque paquet de tôles peut comporter au moins un logement recevant l'aimant permanent. Dans le cas où la masse rotorique comporte plusieurs paquets de tôles empilés les uns sur les autres, la masse rotorique peut comporter, pour un logement, un seul ou plusieurs aimants permanents, par exemple un aimant permanent par paquet de tôles.

L'invention a notamment pour objet, selon l'un de ses aspects, un rotor de machine électrique tournante, comportant une masse rotorique comportant des tôles empilées les unes sur les autres, la masse rotorique comportant une pluralité de logements, au moins une partie des logements, recevant un ou des aimants permanents définissant des pôles du rotor,
les logements d'un pôle étant disposés en au moins une première et une deuxième rangées de logements qui ne sont pas parallèles entre elles,
la première rangée de logements comportant au moins trois logements disposés en U, avec au moins un logement central et deux logements latéraux, le logement central de la première rangée étant dépourvu d'aimant permanent,
la deuxième rangée de logements comportant des logements disposés en V, notamment deux logements disposés en V,
le logement central de la première rangée étant séparé de chacun des logements latéraux par un pont de matière, chacun des ponts de matière s'étendant selon un axe du pont de matière qui fait un angle γ non nul avec un axe du pôle.

L'invention a également pour objet, selon un autre de ses aspects, un rotor de machine électrique tournante, comportant une masse rotorique comportant des tôles empilées les unes sur les autres, la masse rotorique comportant une pluralité de logements, au moins une partie des logements, voire tous les logements, recevant un ou des aimants permanents définissant des pôles du rotor,
les logements d'un pôle étant disposés en au moins une première et une deuxième rangées de logements qui ne sont pas parallèles entre elles,
la première rangée de logements comportant au moins trois logements disposés en U, avec au moins un logement central et deux logements latéraux, le logement central de la première rangée pouvant être dépourvu d'aimant permanent,
la deuxième rangée de logements comportant des logements disposés en V, notamment deux logements disposés en V,
les aimants permanents reçus dans les logements latéraux de la première rangée s'étendant en section transversale selon un grand axe formant avec un axe perpendiculaire à un axe du pôle un angle β2, et les aimants permanents reçus dans les logements de la deuxième rangée s'étendant en section transversale selon un grand axe formant avec un axe perpendiculaire à un axe du pôle un angle α2, avec β2 > α2.

### Exposé de l'invention

Indépendamment ou en combinaison avec ce qui précède, le rotor peut comporter l'une ou plusieurs des caractéristiques qui suivent.

Les aimants permanents reçus dans les logements latéraux de la première rangée peuvent s'étendre en section transversale selon un grand axe formant avec un axe perpendiculaire à un axe du pôle un angle β2. Les aimants permanents reçus dans les logements de la deuxième rangée peuvent s'étendre en section transversale selon un grand axe formant avec un axe perpendiculaire à un axe du pôle un angle α2.

On peut avoir β2 > α2.Le rapport β2/α2 peut être compris entre 1 et 1,25, la valeur 1 étant exclue, mieux entre 1,05 et 1,20, voire encore entre 1,10 et 1,15, étant par exemple de 1,11.

L'angle α2 peut par exemple être compris dans la plage 25° à 50°, mieux 30° à 48°, étant par exemple de 45°.

L'angle β2 peut par exemple être compris dans la plage 30° à 55°, mieux 35° à 53°, étant par exemple de 50°.

Compte tenu de la différence entre β2 et α2, les deux rangées de logements sont séparées par une bande de tôle dont la largeur va croissante quand on se rapproche de l'axe du pôle.

La largeur de la bande de tôle peut par exemple varier d'une largeur d1 au niveau de l'axe du pôle, à une largeur d2 au niveau de l'entrefer, aux extrémités des rangées. Un ratio d1/d2 peut notamment être supérieur à 1. Par exemple, on peut avoir d1/d2 compris entre 1 valeur exclue et 1,65. Dans un exemple de réalisation, on a d1/d2 = 1,43. Dans un autre exemple de réalisation, on a d1/d2 = 1,44.

Le ou les aimants permanents reçus dans la première rangée de logements dans une branche du U sont alignés entre eux.

Par ailleurs, la largeur de la première rangée de logements va croissante quand on se rapproche de l'axe du pôle. Le logement central est plus large que les logements latéraux, en section transversale. Cela permet une réduction des fuites magnétiques des aimants ainsi qu'une augmentation du couple de saillance.

On peut définir un ratio h3/h2 entre la largeur h3 de la rangée au niveau de l'axe du pôle et la largeur h2 de la première rangée au niveau des aimants, aux extrémités des rangées. Le ratio h3/h2 peut notamment être supérieur à 1. Par exemple, on peut avoir h3/h2 compris entre 1 valeur exclue et 1,75. Dans un exemple de réalisation, on a h3/h2 = 1,58.

Au moins un des logements latéraux de la première rangée, notamment les deux logements latéraux de la première rangée, comporte un évidement qui s'étend depuis le logement latéral vers le logement central. L'évidemment peut aller en s'élargissant lorsque l'on se rapproche du logement central. L'évidement est dépourvu d'aimant permanent.

L'évidement a un bord qui forme avec un axe perpendiculaire à un axe du pôle un angle β1. Le bord concerné est le bord de l'évidement situé du côté de la bande de tôle entre les deux rangées de logements. Le bord peut être rectiligne, ou au moins partiellement rectiligne. L'angle β1 peut par exemple être compris dans la plage 0° à 35°, mieux 10° à 30°, étant par exemple de 23,3° ou 25°. Le rapport β2/β1 est compris entre 1,2 et 3, mieux entre 1,5 et 2,5, étant par exemple de 2,15 ou 2.

L'évidement peut avoir un bord qui s'étend au moins partiellement parallèlement à un bord du logement central.

Le logement central de la première rangée est séparé de chacun des logements latéraux par un pont de matière. La première rangée comporte ainsi deux ponts de matière de part et d'autre du logement central.

Chacun des ponts de matière s'étend selon un axe du pont de matière qui fait un angle γ non nul avec un axe du pôle. Le fait d'avoir deux ponts de matière dans la première rangée permet de réduire la concentration des contraintes entre l'arbre et chacun des ponts. En outre, le choix de l'angle du pont permet d'améliorer la tenue mécanique.

L'angle y peut être compris entre 10° et 40°, notamment entre 15° et 35°, mieux entre 20° et 30°, étant par exemple de l'ordre de 25°. Une telle inclinaison des ponts de matière permet d'améliorer la tenue mécanique des tôles, et ainsi la performance magnétique car les flux de fuites des aimants peuvent en être réduits.

Chaque pont de matière peut être défini par deux bords parallèles l'un à l'autre. Le pont de matière entre les logements latéraux et le logement central peut avoir une largeur minimale conditionnée par les contraintes de tenue mécanique. Sa largeur est sensiblement égale au moins à l'épaisseur de la tôle magnétique. Chaque pont de matière peut avoir une largeur inférieure à 3,05 mm, mieuxinférieure à 2,7 mm, étant par exemple de 2,35 mm.

En particulier, les ponts de matière peuvent se rapprocher de l'axe du pôle quand on se rapproche de l'entrefer et que l'on s'éloigne d'un axe de rotation du rotor. Les ponts de matières s'éloignent de l'axe du pôle quand on se rapproche d'un axe de rotation du rotor. Une telle configuration permet d'améliorer la tenue mécanique du rotor. Elle permet également d'améliorer la performance magnétique, car on réduit ainsi le flux de fuites des aimants.

Le logement central peut comporter un bord du côté de l'axe de rotation du rotor qui est au moins partiellement rectiligne, étant notamment perpendiculaire à un axe du pôle.

Le logement central peut être défini du côté opposé à l'axe de rotation par un bord concave qui peut être formé par deux portions rectiligne formant un angle entre elles, ce qui permet de ne pas diminuer la largeur de la bande de tôle entre les deux rangées, au niveau du pont de matière de la deuxième rangée. Cela est avantageux magnétiquement. Dans une variante de réalisation, le bord concave peut être arrondi, par exemple selon un arc de cercle.

Les logements latéraux de la première rangée peuvent être pourvus d'aimants permanents.

Le logement central de la première rangée peut être dépourvu d'aimant permanent. Il peut être vide.

En variante, le logement central de la première rangée peut être pourvu d'un aimant permanent, par exemple d'un aimant permanent plus petit que les aimants permanents des logements latéraux. En fonction du choix pour la présence ou non d'un aimant permanent central, le rotor peut permettre avantageusement une certaine modularité pour la machine résultante.

Les aimants permanents des logements latéraux de la première rangée peuvent être identiques l'un à l'autre. Ils peuvent notamment avoir la même taille en section transversale.

Les aimants permanents de la première rangée peuvent être de largeur égale aux aimants permanents de la deuxième rangée.

Les aimants permanents de la première rangée peuvent être de longueur double de celle des aimants permanents de la deuxième rangée, ou en variante de longueur égale, avec dans ce cas deux aimants permanents par branche du U, qui sont de préférence alignés. On peut ainsi avantageusement réduire la diversité de taille d'aimant nécessaire, et par exemple avoir une seule dimension d'aimant pour le rotor. On réduit ainsi les pertes induites par courants de Foucault dans les aimants.

La 'longueur' est mesurée selon l'axe de la rangée de logements. On parle de 'largeur' pour désigner la dimension perpendiculaire à la longueur dans le plan d'une section transversale de la masse rotorique.

Dans un mode de réalisation, la longueur d'un aimant de la deuxième rangée peut être égale à la longueur d'un aimant de la première rangée. Tous les aimants d'un pôle peuvent avoir la même longueur.

Les logements de la deuxième rangée sont disposés en V. La deuxième rangée peut notamment comporter deux logements disposés en V. Ils peuvent être symétriques l'un de l'autre par rapport à un axe du pôle. Dans un mode de réalisation, tous les logements de la deuxième rangée sont pourvus d'aimants permanents. La configuration en V de la deuxième rangée permet un gain de place, et d'éviter tout risque de saturation du circuit magnétique.

Dans une autre variante de réalisation, les logements de la deuxième rangée sont vides, étant dépourvus d'aimants.

Les aimants permanents de la deuxième rangée peuvent être identiques l'un à l'autre. Ils peuvent notamment avoir la même taille en section transversale. Les aimants permanents de la deuxième rangée peuvent avoir une taille différente des aimants permanents de la première rangée, étant par exemple plus petits.

La deuxième rangée peut être dépourvue d'un logement central. La deuxième rangée peut ne comporter que des logements latéraux, lesquels peuvent recevoir des aimants permanents.

Au moins un des logements de la deuxième rangée, notamment les deux logements de la deuxième rangée, peuvent comporter un évidement qui s'étend depuis ledit logement vers l'autre logement de la deuxième rangée. L'évidemment peut aller en s'élargissant lorsque l'on se rapproche de l'autre logement. L'évidement est dépourvu d'aimant permanent.

L'évidement peut comporter un bord du côté opposé à l'axe de rotation qui est rectiligne et qui s'étend perpendiculairement à un axe du pôle. Les deux bords des deux évidements de la deuxième rangée peuvent ainsi être alignés.

L'évidement peut avoir un bord qui forme avec un axe perpendiculaire à un axe du pôle un angle α1. Le bord concerné est le bord de l'évidement situé du côté de la bande de tôle entre les deux rangées de logements. L'angle α1 peut par exemple être compris dans la plage 0° à 25°, mieux 10° à 23°, étant par exemple de 20°.

Le rapport α2/α1 peut être compris entre 1,2 et 3, mieux entre 1,5 et 2,5, étant par exemple de 2,25.

Le rapport β1/α1 peut être compris entre 1 et 1,5, la valeur 1 pouvant être exclue, mieux entre 1,1 et 1,4, étant par exemple de 1,165 ou 1,25. Compte tenu de la différence entre β1 et α1, les deux rangées de logements sont séparées par une bande de tôle dont la largeur va croissante quand on se rapproche de l'axe du pôle. La largeur de la bande de tôle entre les deux rangées de logements est plus importante au niveau de l'axe du pôle. La différence entre β1 et α1 est assez faible, de sorte que la perturbation du passage du flux magnétique dans la bande de tôle entre les deux rangées de logements est minimisée.

Les deux logements de la deuxième rangée peuvent ménager entre eux un pont de matière, ledit pont de matière s'étendant selon un axe du pont de matière qui s'étend selon un axe du pôle. Le pont de matière peut être défini par deux bords parallèles l'un à l'autre. En particulier, ces deux bords parallèles sont des bords des évidements des deux logements de la deuxième rangée. Le pont de matière peut avoir une largeur inférieure à 1,7mmmm, mieux inférieure à 1,5 mm, étant par exemple de 1,3mm.

Par ailleurs, la largeur de la deuxième rangée de logements va croissante quand on se rapproche de l'axe du pôle. Cela permet une réduction des fuites magnétiques des aimants ainsi qu'une augmentation du couple de saillance. On peut définir un ratio h1/h2 entre la largeur h1 de la rangée au niveau de l'axe du pôle et la largeur h2 de la deuxième rangée au niveau des aimants, aux extrémités des rangées. Le ratio h1/h2 peut notamment être supérieur à 1. Par exemple, on peut avoir h1/h2 compris entre 1 valeur exclue et 1,75. Dans un exemple de réalisation, on a h1/h2 = 1,33.

Le rotor peut comporter 6 pôles. Le choix du nombre de pôle permet d'assurer un défluxage de la machine et des rendements élevés à haute vitesse.

Au moins un logement peut comporter au moins une butée de maintien de l'aimant permanent destiné à être reçu dans le logement. Chaque logement peut comporter une butée située vers l'entrefer.

Les logements sont séparés de l'entrefer chacun par un pont de matière dont la largeur est conditionnée par les contraintes de tenue mécanique. Leur largeur est sensiblement égale au moins à l'épaisseur de la tôle magnétique. La longueur de ces ponts est sensiblement égale à la largeur des logements.

Les logements latéraux peuvent également comporter, ou non, une butée située vers l'évidemment, pour le maintien de l'aimant permanent.

Le rotor peut être dépourvu de circulation de liquide de refroidissement dans les logements. En particulier, les évidements peuvent ne pas être configurés pour permettre la circulation d'un liquide de refroidissement.

L'invention a encore pour objet une machine électrique tournante comportant un stator et un rotor tel que défini ci-dessus.

La machine peut être utilisée comme moteur ou comme générateur. La machine peut être à reluctance. Elle peut fonctionner en moteur synchrone ou en variante en générateur synchrone. En variante encore, elle constitue une machine asynchrone.

La vitesse maximale de rotation de la machine peut être élevée, étant par exemple supérieure à 10 000 tr/min, mieux supérieure à 12 000 tr/min, étant par exemple de l'ordre de 14 000 tr/min à 15 000 tr/min, voire même de 20 000 tr/min ou de 24 000 tr/min ou de 25 000 tr/min. La vitesse maximale de rotation de la machine peut être inférieure à 100 000 tr/min, voire à 60 000 tr/min, voire encore inférieure à 40 000 tr/min, mieux inférieure à 30 000 tr/min.

L'invention peut convenir tout particulièrement pour des machines de forte puissance.

La machine peut comporter un seul rotor intérieur ou, en variante, un rotor intérieur et un rotor extérieur, disposés radialement de part et d'autre du stator et accouplés en rotation.

La machine peut fonctionner seule ou être couplée à une boîte de vitesse. Dans ce cas, elle est insérée dans un carter qui loge également une boîte de vitesse.

La machine comporte un stator. Ce dernier comporte des dents définissant entre elles des encoches. Le stator peut comporter des conducteurs électriques, au moins une partie des conducteurs électriques, voire une majorité des conducteurs électriques, pouvant être en forme d'épingle en U ou en I. En variante, les conducteurs électriques peuvent comporter du fil rond.

Le stator peut être connecté en étoile ou en triangle.

La machine peut comporter un nombre de pôles compris entre 2 et 48, mieux entre 4 et 24, voire entre 6 et 12, étant par exemple de 6 ou 8.

L'invention a encore pour objet un procédé de fabrication d'un rotor de machine électrique tournante tel que défini ci-dessus.

Le procédé peut comporter l'étape consistant à introduire longitudinalement, le long de l'axe de rotation du rotor, au moins un aimant permanent dans le logement.

Dans le cas où la masse rotorique comporte plusieurs paquets de tôles empilés les uns sur les autres, le procédé peut d'abord comporter l'étape consistant à introduire longitudinalement au moins un aimant permanent dans le logement de chaque paquet de tôles, puis l'étape consistant à empiler les paquets de tôles les uns sur les autres, avec les aimants permanents dans les logements.

### Brève description des dessins

[Fig 1] La figure 1 est une vue schématique et partielle, en coupe transversale, d'un rotor de machine électrique tournante selon l'invention,
[Fig 2] la figure 2 est une vue analogue à la figure 1 sans les aimants permanents,
[Fig 3] la figure 3 est une vue de détail de la figure 1,
[Fig 4a] la figure 4a est une vue analogue à la figure 1 d'une variante de réalisation.
[Fig 4b] la figure 4b est une vue analogue à la figure 1 d'une autre tôle de la variante de la figure 4a.

### Description détaillée

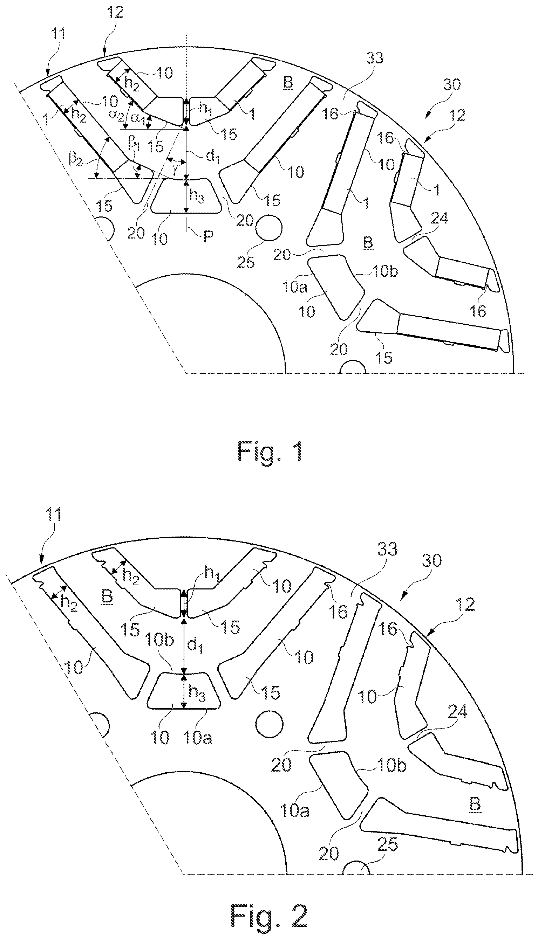

On a illustré aux figures 1 à 3 un rotor 30 de machine électrique tournante selon l'invention, comportant une masse rotorique 33 dans laquelle sont ménagés des logements 10. Des aimants permanents 1 sont insérés dans chacun des logements 10, de façon à définir des pôles du rotor. Ce rotor est destiné à être associé à un stator non représenté.

Les aimants 1 sont dans cet exemple de forme générale rectangulaire en section transversale. Chaque aimant 1 présente, en section transversale, d'une part, un premier grand côté et un deuxième grand côté, opposé au premier, et d'autre part, un premier petit côté et un deuxième petit côté, opposé au premier. Chaque logement 10 est délimité par deux faces en regard respectivement du premier grand côté et du deuxième grand côté de l'aimant 1.

Les logements 10 d'un pôle sont disposés en une première rangée 11 de logements plus éloignée de l'entrefer et une deuxième rangée 12 de logements plus proche de l'entrefer. Les première et deuxième rangées de logements ne sont pas parallèles entre elles.

La première rangée 11 de logements 10 comporte trois logements 10 disposés en U, avec un logement central et deux logements latéraux symétriques l'un de l'autre par rapport à un axe du pôle P. Dans l'exemple décrit, le logement central de la première rangée est vide, étant dépourvu d'aimant permanent.

Les logements latéraux de la première rangée 11 sont pourvus d'aimants permanents 1. Les aimants permanents des logements latéraux de la première rangée 11 sont identiques l'un à l'autre. Ils ont notamment la même taille en section transversale.

La deuxième rangée 12 de logements comporte deux logements disposés en V. Ils sont symétriques l'un de l'autre par rapport à un axe du pôle P. Dans l'exemple décrit, tous les logements de la deuxième rangée 12 sont pourvus d'aimants permanents 1. Les aimants permanents de la deuxième rangée sont identiques l'un à l'autre. Ils ont notamment la même taille en section transversale.

Les aimants permanents 1 reçus dans les logements latéraux de la première rangée 11 s'étendent en section transversale selon un grand axe formant avec un axe perpendiculaire à un axe du pôle un angle β2.

Les aimants permanents reçus dans les logements de la deuxième rangée s'étendent en section transversale selon un grand axe formant avec un axe perpendiculaire à un axe du pôle un angle α2.

On a β2 > α2. Le rapport β2/α2 peut être par exemple de 1,11.

L'angle α2 peut par exemple être de 45°.

L'angle β2 peut par exemple être de 50°.

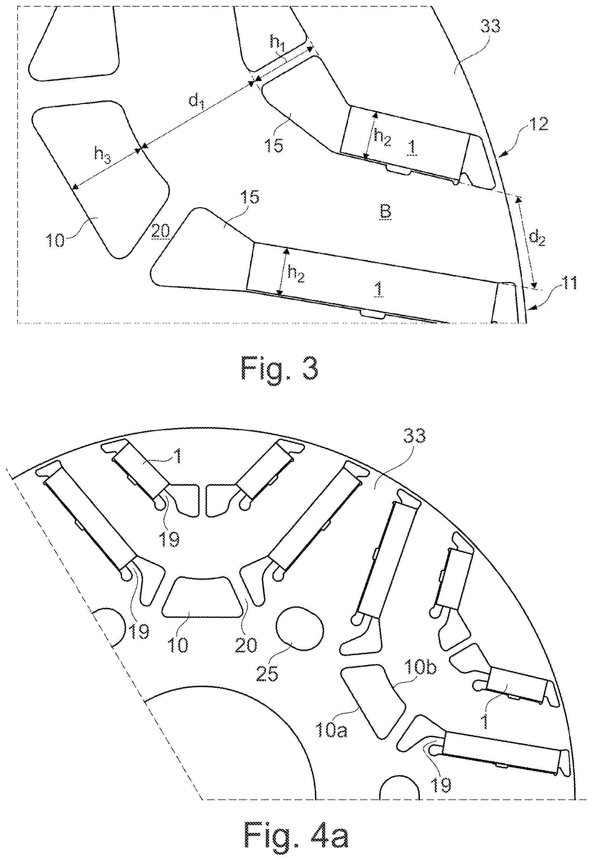

Compte tenu de la différence entre β2 et α2, les deux rangées de logements sont séparées par une bande B de tôle dont la largeur va croissante quand on se rapproche de l'axe du pôle. La largeur de la bande B de tôle varie d'une largeur d1 au niveau de l'axe du pôle, à une largeur d2 au niveau de l'entrefer, aux extrémités des rangées, comme bien visible sur la figure 3. La largeur d2 est mesurée sur une ligne droite s'étendant entre les points d'intersection obtenus par la prolongation du bord des logements avec le diamètre extérieur du rotor, au niveau de l'entrefer. Un ratio d1/d2 est notamment supérieur à 1. Par exemple, on peut avoir d1/d2 = 1,43.

Par ailleurs, la largeur de la première rangée de logements va croissante quand on se rapproche de l'axe du pôle. Le logement central est plus large que les logements latéraux, en section transversale. On peut définir un ratio h3/h2 entre la largeur h3 de la première rangée 11 au niveau de l'axe du pôle et la largeur h2 de la première rangée au niveau des aimants, aux extrémités des rangées. Le ratio h3/h2 est notamment supérieur à 1. Par exemple, on peut avoir h3/h2 = 1,58.

En outre les deux logements latéraux de la première rangée 11 comportent un évidement 15 qui s'étend depuis le logement latéral vers le logement central. L'évidement 15 a un bord qui s'étend au moins partiellement parallèlement à un bord du logement central. L'évidemment va en s'élargissant lorsque l'on se rapproche du logement central. L'évidement est dépourvu d'aimant permanent.

L'évidement 15 de la première rangée a un bord qui forme avec un axe perpendiculaire à un axe du pôle un angle β1. Le bord concerné est le bord de l'évidement situé du côté de la bande de tôle entre les deux rangées de logements. Le bord est sensiblement rectiligne. L'angle β1 est par exemple de 23,3° ou 25°. Le rapport β2/β1 est par exemple de 2,15 ou 2.

Le logement central de la première rangée est séparé de chacun des logements latéraux 10 par un pont de matière 20. La première rangée comporte ainsi deux ponts de matière 20 de part et d'autre du logement central.

Chacun des ponts de matière 20 s'étend selon un axe du pont de matière qui fait un angle γ non nul avec l'axe du pôle P. L'angle y est par exemple de l'ordre de 25°. Chaque pont de matière 20 est défini par deux bords parallèles l'un à l'autre.

Les ponts de matière 20 se rapprochent de l'axe du pôle quand on se rapproche de l'entrefer et que l'on s'éloigne d'un axe de rotation du rotor. Les ponts de matières 20 s'éloignent de l'axe du pôle quand on se rapproche d'un axe de rotation du rotor.

Le logement central comporte un bord 10a du côté de l'axe de rotation du rotor qui est au moins partiellement rectiligne, étant perpendiculaire à l'axe du pôle P.

Le logement central est défini du côté opposé à l'axe de rotation par un bord concave 10b formé par deux portions rectilignes formant un angle entre elles.

Par ailleurs, les deux logements de la deuxième rangée 12 comportent également un évidement 15 qui s'étend depuis ledit logement vers l'autre logement de la deuxième rangée. L'évidemment va en s'élargissant lorsque l'on se rapproche de l'autre logement. L'évidement est dépourvu d'aimant permanent.

L'évidement 15 comporte un bord du côté opposé à l'axe de rotation qui est rectiligne et qui s'étend perpendiculairement à l'axe du pôle P. Les deux bords des deux évidements de la deuxième rangée sont ainsi alignés.

L'évidement 15 a un bord qui forme avec un axe perpendiculaire à l'axe du pôle P un angle α1. Le bord concerné est le bord de l'évidement situé du côté de la bande de tôle entre les deux rangées de logements. L'angle α1 est par exemple de 20°. Le rapport α2/α1 est par exemple de 2,25.

Le rapport β1/α1 est par exemple de 1,165 ou 1,25. Compte tenu de la différence entre β1 et α1, les deux rangées 11, 12 de logements sont séparées par la bande de tôle B dont la largeur va croissante quand on se rapproche de l'axe du pôle.

Les deux logements de la deuxième rangée 12 ménagent entre eux un pont de matière 24, ledit pont de matière 24 s'étendant selon un axe du pont de matière qui s'étend selon un axe du pôle. Le pont de matière 24 peut être défini par deux bords parallèle l'un à l'autre. En particulier, ces deux bords parallèles sont des bords des évidements 15 des deux logements de la deuxième rangée 12.

Par ailleurs, la largeur de la deuxième rangée de logements va croissante quand on se rapproche de l'axe du pôle. On peut définir un ratio h1/h2 entre la largeur h1 de la deuxième rangée 12 au niveau de l'axe du pôle et la largeur h2 de la deuxième rangée au niveau de l'entrefer, aux extrémités des rangées. Le ratio h1/h2 est notamment supérieur à 1. Par exemple, on peut avoir h1/h2 = 1,33.

Les logements latéraux de la première rangée 11 ainsi que les logements de la deuxième rangée 12 comportent une butée 16 de maintien de l'aimant permanent destiné à être reçu dans le logement, cette butée 16 étant située vers l'entrefer.

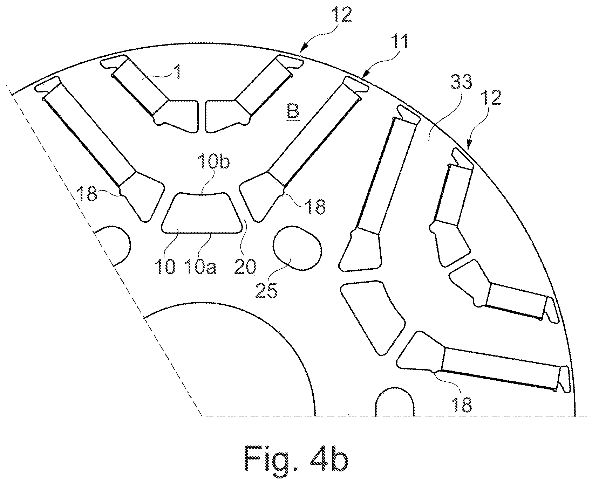

Dans la variante de réalisation illustrée aux figures 4a et 4b, certaines tôles du rotor comportent des languettes déformables 19 qui se raccordent chacune à une face du logement correspondant, comme illustré à la figure 4a, tandis que d'autres tôles de l'empilement n'en comportent pas, comme illustré à la figure 4b. Dans l'exemple illustré, seuls les logements latéraux des premières rangées 11 et les logements des deuxièmes rangées 12 comportent une telle languette déformable 19.

Les languettes déformables 19 s'étendent chacune dans le logement correspondant. Chaque languette déformable 19 comporte une portion qui est pliée de manière à être plaquée contre un petit côté de l'aimant correspondant. La portion pliable de la languette déformable 19 est pliée en dehors du plan des tôles, selon un axe de pliure de la languette déformable 19 s'étendant dans un plan parallèle au plan de la tôle.

Dans un mode de réalisation, certaines tôles du rotor pourraient comporter en variante ou additionnellement, des languettes venant en contact avec l'aimant permanent sur un grand côté de celui-ci.

La variante de réalisation illustrée aux figures 4a et 4b diffère également de la précédente par le fait que le logement central est défini du côté opposé à l'axe de rotation par un bord concave 10b qui est arrondi, s'étendant selon un arc de cercle.

Dans un mode de réalisation, le rotor peut par exemple comporter huit paquets de tôles, chaque paquet comportant 50 tôles dont 3 avec languettes et 47 sans languettes. Chaque aimant est ainsi maintenu par 3 languettes.

Par ailleurs, on voit dans ce mode de réalisation que les logements 10 comportent une découpe 18 ménagée dans une face du logement 10 du côté de l'axe de rotation du rotor, entre la languette déformable 19 et l'aimant 1. Une partie de l'aimant 1 s'étend dans l'espace 43 formé dans le logement 10 par la découpe 18. L'aimant 1 vient ainsi recouvrir au moins partiellement la découpe 18. Ces découpes permettent de faciliter le pliage des languettes et facilitent la découpe des tôles.

Les tôles comportent également des cavités 25 qui peuvent être utilisées lors de la fabrication comme repérage, et qui peuvent également éventuellement servir pour la rigidification du rotor pour le passage de tirants.

Bien entendu, les formes des logements 10 et des évidements 15 pourraient varier sans que l'on sorte du cadre de la présente invention.

Dans l'exemple décrit, le rotor comporte un nombre de pôles de 6. Bien entendu, on ne sort pas du cadre de la présente invention si celui-ci est différent, étant par exemple de 8.

## Revendications

1. Rotor (30) de machine électrique tournante, comportant une masse rotorique (33) comportant des tôles empilées les unes sur les autres, la masse rotorique (33) comportant une pluralité de logements (10), au moins une partie des logements recevant un ou des aimants permanents (1) définissant des pôles du rotor,
les logements d'un pôle étant disposés en au moins une première (11) et une deuxième (12) rangées de logements qui ne sont pas parallèles entre elles, les deux rangées (11, 12) de logements étant séparées par une bande de tôle,
la première rangée (11) de logements comportant au moins trois logements disposés en U, avec au moins un logement central et deux logements latéraux, le logement central de la première rangée (11) étant dépourvu d'aimant permanent,
la deuxième rangée de logements comportant des logements disposés en V, notamment deux logements disposés en V,
le logement central de la première rangée (11) étant séparé de chacun des logements latéraux par un pont de matière (20), chacun des ponts de matière s'étendant selon un axe du pont de matière qui fait un angle aigu (γ) non nul avec un axe du pôle (P),
au moins un des logements latéraux de la première rangée (11) comportant un évidement (15) qui s'étend depuis le logement latéral vers le logement central,
l'évidement (15) ayant un bord situé du côté de la bande de tôle entre les deux rangées de logements qui forme avec un axe perpendiculaire à un axe du pôle un angle aigu (β1),
le bord étant rectiligne ou au moins partiellement rectiligne,
les aimants permanents reçus dans les logements latéraux de la première rangée s'étendant en section transversale selon un grand axe formant avec un axe perpendiculaire à un axe du pôle un angle aigu β2,
le rapport β2/β1 étant compris entre 1,2 et 3.

2. Rotor selon la revendication précédente, les aimants permanents (1) reçus dans les logements latéraux de la première rangée (11) s'étendant en section transversale selon un grand axe formant avec un axe perpendiculaire à un axe du pôle (P) un angle β2, et les aimants permanents (1) reçus dans les logements de la deuxième rangée (12) s'étendant en section transversale selon un grand axe formant avec un axe perpendiculaire à un axe du pôle (P) un angle α2, avec β2 > α2.

3. Rotor selon la revendication précédente, le rapport β2/α2 étant compris entre 1 et 1,25, la valeur 1 étant exclue, mieux entre 1,05 et 1,20, voire encore entre 1,10 et 1,15.

4. Rotor selon l'une quelconque des revendications précédentes, les deux logements latéraux de la première rangée (11) comportant un évidement (15) qui s'étend depuis le logement latéral vers le logement central.

5. Rotor selon la revendication précédente, l'évidement (15) ayant un bord qui forme avec un axe perpendiculaire à un axe du pôle un angle (β1).

6. Rotor selon l'une des deux revendications précédentes, l'évidement (15) ayant un bord qui s'étend au moins partiellement parallèlement à un bord du logement central.

7. Rotor selon la revendication précédente, l'angle (γ) étant compris entre 10° et 40°, mieux entre 20° et 30°, étant notamment de 25°.

8. Rotor selon l'une quelconque des revendications précédentes, dans lequel les ponts de matière (20) se rapprochent de l'axe du pôle (P) quand on se rapproche de l'entrefer et que l'on s'éloigne d'un axe de rotation du rotor.

9. Rotor selon l'une quelconque des revendications précédentes, dans lequel les logements latéraux de la première rangée (11) sont pourvus d'aimants permanents (1).

10. Rotor selon l'une quelconque des revendications précédentes, au moins un des logements de la deuxième rangée (12), notamment les deux logements de la deuxième rangée (12), comportant un évidement (15) qui s'étend depuis ledit logement vers l'autre logement de la deuxième rangée.

11. Rotor selon la revendication précédente, l'évidement (15) ayant un bord qui forme avec un axe perpendiculaire à un axe du pôle un angle (α1).

12. Rotor selon l'une quelconque des revendications précédentes, les deux logements de la deuxième rangée (12) ménageant entre eux un pont de matière (24), ledit pont de matière (24) s'étendant selon un axe du pont de matière qui s'étend selon un axe du pôle.

13. Rotor selon l'une quelconque des revendications précédentes, comportant 6 pôles.

14. Rotor selon l'une quelconque des revendications précédentes, au moins un logement (10) comportant au moins une butée (16) de maintien de l'aimant permanent (1) destiné à être reçu dans le logement.

15. Machine électrique tournante, comportant un stator et un rotor (30) tel que défini selon l'une quelconque des revendications précédentes.

## Patentansprüche

1. Rotor (30) einer rotierenden elektrischen Maschine mit einer rotierenden Masse (33), die übereinander gestapelte Bleche aufweist, wobei die rotierende Masse (33) eine Vielzahl von Aufnahmen (10) aufweist, wobei zumindest ein Teil der Aufnahmen einen oder mehrere Permanentmagnete (1) aufnimmt, die Rotorpole definieren,
wobei die Aufnahmen eines Pols in mindestens einer ersten (11) und einer zweiten (12) Reihe von Aufnahmen angeordnet sind, die nicht parallel zueinander verlaufen, wobei die beiden Reihen (11, 12) der Aufnahmen durch einen Blechstreifen getrennt sind,
die erste Reihe (11) von Aufnahmen mit mindestens drei U-förmig angeordneten Aufnahmen, mit mindestens einer zentralen Aufnahme und zwei seitlichen Aufnahmen, wobei die zentrale Aufnahme der ersten Reihe (11) frei von einem Dauermagneten ist,
die zweite Reihe von Wohnungen mit V-förmig angeordneten Wohnungen, insbesondere zwei V-förmig angeordneten Wohnungen,
wobei die zentrale Ausnehmung der ersten Reihe (11) von jeder der seitlichen Ausnehmungen durch eine Materialbrücke (20) getrennt ist, wobei jede der Materialbrücken sich entlang einer Achse der Materialbrücke erstreckt, die einen spitzen Winkel (γ) ungleich null mit einer Achse des Pols (P) bildet,
wenigstens eine der seitlichen Aufnahmen der ersten Reihe (11) mit einer Ausnehmung (15), die sich von der seitlichen Aufnahme zur zentralen Aufnahme erstreckt,
die Ausnehmung (15) mit einem blechbandseitigen Rand zwischen den beiden Aufnahmereihen, der mit einer zu einer Polachse senkrechten Achse einen spitzen Winkel (β1) bildet,
die Kante gerade oder zumindest teilweise gerade ist,
Dauermagnete in den seitlichen Gehäusen der ersten Reihe, die sich im Querschnitt entlang einer Hauptachse erstrecken und mit einer Achse senkrecht zu einer Achse des Pols einen spitzen Winkel β2 bilden,
Das β2/β1-Verhältnis liegt zwischen 1,2 und 3.

2. Rotor nach dem vorhergehenden Anspruch, wobei die in den seitlichen Gehäusen der ersten Reihe (11) aufgenommenen Permanentmagnete (1) sich im Querschnitt entlang einer Hauptachse erstrecken, die mit einer zu einer Achse des Pols (P) senkrechten Achse einen Winkel β2 bildet, und die in den Gehäusen der zweiten Reihe (12) aufgenommenen Permanentmagnete (1) sich im Querschnitt entlang einer Hauptachse erstrecken, die mit einer zu einer Achse des Pols (P) senkrechten Achse einen Winkel α2 bildet, wobei β2 > α2 ist.

3. Rotor nach dem vorhergehenden Anspruch, wobei das Verhältnis β2/α2 zwischen 1 und 1,25 liegt, wobei der Wert 1 ausgeschlossen ist, besser zwischen 1,05 und 1,20, oder sogar zwischen 1,10 und 1,15.

4. Rotor nach einem der vorhergehenden Ansprüche, wobei die beiden seitlichen Aufnahmen der ersten Reihe (11) eine Ausnehmung (15) aufweisen, die sich von der seitlichen Aufnahme zu der zentralen Aufnahme erstreckt.

5. Rotor nach dem vorhergehenden Anspruch, wobei die Ausnehmung (15) einen Rand aufweist, der mit einer zu einer Achse des Pols senkrechten Achse einen Winkel (β1) bildet.

6. Rotor nach einem der beiden vorhergehenden Ansprüche, wobei die Ausnehmung (15) einen Rand aufweist, der sich zumindest teilweise parallel zu einem Rand des zentralen Gehäuses erstreckt.

7. Rotor nach dem vorhergehenden Anspruch, wobei der Winkel (γ) zwischen 10° und 40°, besser zwischen 20° und 30°, insbesondere 25° beträgt.

8. Rotor nach einem der vorhergehenden Ansprüche, bei dem sich die Materialbrücken (20) der Polachse (P) nähern, wenn sie sich dem Luftspalt nähern und sich von einer Rotationsachse des Rotors entfernen.

9. Rotor nach einem der vorhergehenden Ansprüche, bei dem die seitlichen Gehäuse der ersten Reihe (11) mit Permanentmagneten (1) versehen sind.

10. Rotor nach einem der vorhergehenden Ansprüche, wobei mindestens eines der Gehäuse der zweiten Reihe (12), insbesondere die beiden Gehäuse der zweiten Reihe (12), eine Ausnehmung (15) aufweist, die sich von dem Gehäuse zu dem anderen Gehäuse der zweiten Reihe erstreckt.

11. Rotor nach dem vorhergehenden Anspruch, wobei die Ausnehmung (15) einen Rand aufweist, der mit einer Achse senkrecht zu einer Achse des Pols einen Winkel (α1) bildet.

12. Rotor nach einem der vorhergehenden Ansprüche, wobei die beiden Gehäuse der zweiten Reihe (12) zwischen sich eine Materialbrücke (24) bilden, wobei die Materialbrücke (24) sich entlang einer Achse der Materialbrücke erstreckt, die sich entlang einer Achse des Pols erstreckt.

13. Rotor nach einem der vorhergehenden Ansprüche mit 6 Polen.

14. Rotor nach einem der vorhergehenden Ansprüche, wobei mindestens ein Gehäuse (10) mindestens einen Anschlag (16) zum Halten des Permanentmagneten (1) zur Aufnahme in dem Gehäuse aufweist.

15. Rotierende elektrische Maschine, die einen Stator und einen Rotor (30) nach einem der vorhergehenden Ansprüche aufweist.

## Claims

1. Rotor (30) of a rotary electrical machine, comprising a rotor mass (33) comprising laminations stacked one on top of the other, the rotor mass (33) comprising a plurality of housings (10), at least part of the housings receiving one or more permanent magnets (1) defining poles of the rotor,
the housings of a pole being arranged in at least a first (11) and a second (12) rows of housings which are not parallel to each other, the two rows (11, 12) of housing being separated by a strip of sheet metal,
the first row (11) of housings comprising at least three housings arranged in a U, with at least one centre housing and two lateral housings, the centre housing of the first row (11) being devoid of a permanent magnet,
the second row of housings comprising V-shaped housings, in particular two V-shaped housings,
the central housing of the first row (11) being separated from each of the lateral housings by a bridge of material (20), each of the bridges of material extending along an axis of the bridge of material which forms a non-zero acute angle (γ) with an axis of the pole (P),
at least one of the lateral housings of the first row (11) comprising a recess (15) which extends from the lateral housing towards the central housing,
the recess (15) having an edge located on the side of the sheet metal strip between the two rows of housings which makes an acute angle (β1),
the edge being rectilinear or at least partially rectilinear,
the permanent magnets received in the lateral housings of the first row extending in cross section along a major axis forming an acute angle β2, with an axis perpendicular to an axis of the pole
the report β2/β1 being between 1.2 and 3.

2. Rotor according to previous claim 1, the permanent magnets (1) received in the lateral housings of the first row (11) extending in cross section along a major axis forming with an axis perpendicular to an axis of the pole (P) an angle β2, and the permanent magnets (1) received in the housings of the second row (12) extending in cross section along a major axis forming with an axis perpendicular to an axis of the pole (P) an angle α2, with β2>α2.

3. Rotor according to the previous claim, the report β2/α2 being between 1 and 1.25, the value 1 being excluded, better still between 1.05 and 1.20, or even between 1.10 and 1.15.

4. Rotor according to any one of the previous claims, the two lateral housings of the first row (11) comprising a recess (15) which extends from the lateral housing towards the central housing.

5. Rotor according to claim 1, the recess (15) having an edge which forms an angle (β1).) with an axis perpendicular to an axis of the pole

6. Rotor according to one of the two previous claims, the recess (15) having an edge which extends at least partially parallel to an edge of the central housing.

7. Rotor according to claim 1, the angle (γ) being between 10° and 40°, better still between 20° and 30°, being in particular 25°.

8. Rotor according to any one of the previous claims, in which the bridges of material (20) move towards the axis of the pole (P) when one moves towards the air gap and moves away from an axis of rotation of the rotor.

9. Rotor according to any one of the previous claims, in which the lateral housings of the first row (11) are provided with permanent magnets (1).

10. Rotor according to any one of the previous claims, at least one of the housings of the second row (12), in particular the two housings of the second row (12), comprising a recess (15) which extends from said housing towards the other housing of the second row.

11. Rotor according to claim 1, the recess (15) having an edge which forms an angle (α1).) with an axis perpendicular to an axis of the pole

12. Rotor according to any one of the previous claims, the two housings of the second row (12) forming between them a bridge of material (24), said bridge of material (24) extending along an axis of the bridge of material which extends along an axis of the pole.

13. Rotor according to any one of the previous claims, comprising 6 poles.

14. Rotor according to any one of the previous claims, at least one housing (10) comprising at least one stop (16) for holding the permanent magnet (1) intended to be received in the housing.

15. Rotating electrical machine, comprising a stator and a rotor (30) as defined according to any one of the previous claims.
